Europäisches Patentamt

European Patent Office

Office européen des brevets

(11) Publication number: **0 438 823 A1**

# EUROPEAN PATENT APPLICATION

(21) Application number: 90203308.3

(22) Date of filing: **13.12.90**

(51) Int. Cl.⁵: **A01C 15/00, A01C 17/00**

(30) Priority: **10.01.90 NL 9000055**

(43) Date of publication of application:
**31.07.91 Bulletin 91/31**

(84) Designated Contracting States:
**AT BE CH DE DK ES FR GB IT LI NL SE**

(71) Applicant: **P.J. Zweegers en Zonen
Landbouwmachinefabriek B.V.
Nuenenseweg 165**
**NL-5667 KP Geldrop(NL)**

(72) Inventor: **Quataert, Maria Petrus
Berg 73
NL-5671 BC Nuenen(NL)**

(74) Representative: **Noz, Franciscus Xaverius, Ir.
et al
Algemeen Octrooibureau P.O. Box 645
NL-5600 AP Eindhoven(NL)**

(54) **Device and method for spreading granular or powdered material.**

(57) The invention relates to a device and a method for spreading granular or powdered material. The device is provided with a frame, with a hopper supported by said frame for accommodating the material to be spread, and with a gutter-shaped (13) spreading means, which is pivotable to and fro about an upwardly extending axis of rotation during operation. Near one supply end of the spreading means material to be spread is supplied and said material is flung away at the opposite discharge end of the spreading means. The device comprises further a throwing means (14) to be driven during operation, which is arranged in such a manner that during operation the material to be spread is thrown into the supply end of the spreading means (13) by means of said throwing means (14).

Fig 4

# DEVICE AND METHOD FOR SPREADING GRANULAR OR POWDERED MATERIAL.

The invention relates to a device for spreading granular or powdered material, said device being provided with a frame, with a hopper supported by said frame for accommodating the material to be spread, and with a gutter-shaped spreading means, which is pivotable to and fro about an upwardly extending axis of rotation during operation, whereby near one supply end of the spreading means material to be spread is supplied and said material is flung away at the opposite discharge end of the spreading means. Such devices, which are e.g. used for spreading fertilizer, have been widely used for decades. With these known devices the material to be spread flows into the spreading means under the influence of gravity, after which it is flung away by the reciprocating spreading means. A drawback of these known devices is that the distance along which the material to be spread can be flung away from the device is comparatively small, so that also the working width of the device, i.e. the width of a strip of land across which the material can be spread during the forward movement of the device, is comparatively small.

The object of the invention is to obtain a device of the above kind wherein this drawback of the known device can be overcome.

According the invention this object can be accomplished in that the device is provided with a throwing means to be driven during operation, which is arranged in such a manner that during operation the material to be spread is thrown into the supply end of the spreading means by means of said throwing means.

When using the construction according to the invention the material to be spread can be supplied to the throwing means at a comparatively great speed, as a result of which said material will leave the throwing means at a considerably greater speed than is the case with the devices which have been usual so far, as a result of which the material to be spread can also be thrown away along a larger distance.

The invention will be explained in more detail hereafter with reference to a possible embodiment of a device according to the invention diagrammatically illustrated in the accompanying Figures.

Figure 1 is a diagrammatic plan view of a device according to the invention, wherein parts have been left out in order to show parts located thereunder.

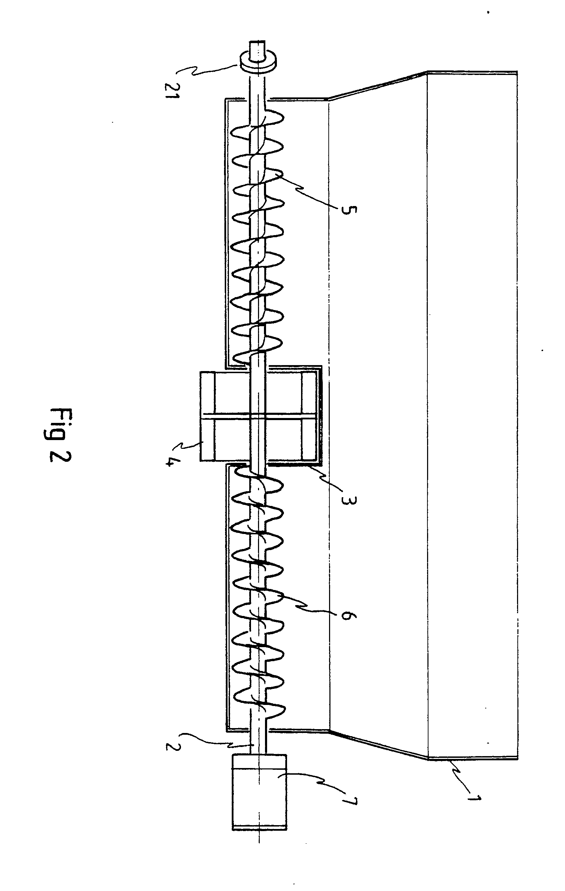

Figure 2 is a diagrammatic longitudinal section of Figure 1.

Figure 3 is a diagrammatic cross-section of Figure 1.

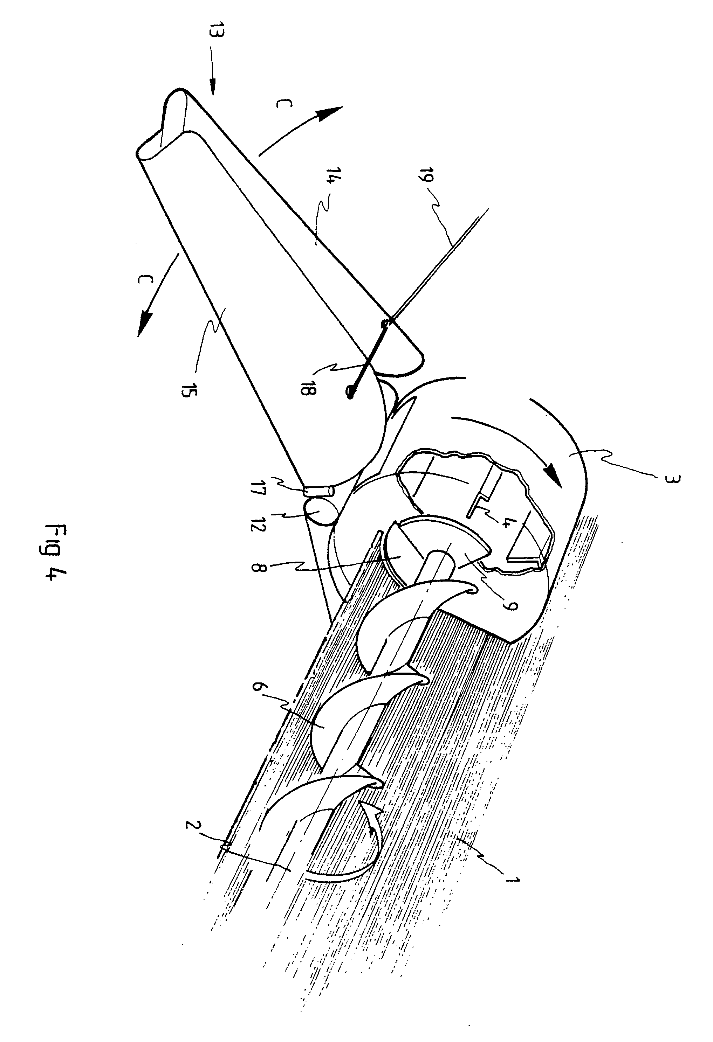

Figure 4 is a diagrammatic perspective view of parts of the device illustrated in Figures 1 - 3.

The device illustrated in the Figures for spreading granular or powdered material, such as fertilizer, is provided with an elongated hopper 1 for accommodating the material to be spread. Said elongated hopper 1 extends transversely to the intended direction of movement of the device during operation, indicated by the arrow A. The hopper may be supported in a manner known per se by a frame (not shown). Said frame may thereby be provided with means for hitching the frame to the three-point lift of a tractor. Another possibility is to provide the frame with ground wheels and a drawbar for hitching the device supported by ground wheels to a tractor or the like.

In the funnel-shaped lower part of the hopper 1 there is journalled a shaft 2, which extends in the longitudinal direction of the hopper. Said shaft also extends through a housing 3 provided near the centre of the hopper 1, in which there is located a wheel provided with blades 4, said wheel being freely rotatable about the shaft 2. On the parts of the shaft 2 located on either side of the housing 3 in the hopper 1 there are provided auger blades 5 and 6 respectively. As will be apparent from the Figures these auger blades 5 and 6 have opposed pitch. The shaft 2 can be rotated during operation, e.g. by means of a hydraulic motor 7 coupled to the shaft 2. The construction is thereby such that when the shaft 2 is rotated by means of the motor 7 the auger blades 5 and 6 will drive material present in the hopper in the direction of the housing 3. In the side walls of the housing 3 there are provided passages 8, via which the material supplied by the auger blades 5 and 6 can flow into the interior of the housing 3. Said passages 8 can be made larger or smaller by means of closing plates 9 which are rotatable about the shaft 2 and which can be fixed in desired positions.

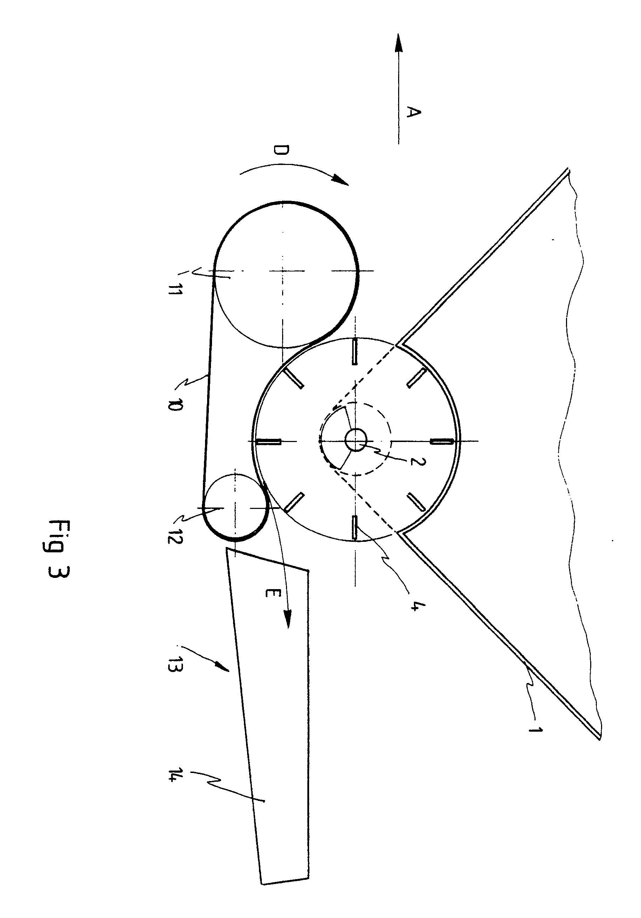

As furthermore appears from Figure 3 the blade wheel comprising the blades 4 projects from the bottom side of the hopper 1, and the lower circumferential part of said blade wheel co-operates with the upper part of an endless belt 10, extending along said circumferential part of the blade wheel.

Said belt is passed over two guide rollers 11 and 12, whereby the rear guide roller 12 (when seen in the intended direction of movement) has a considerably smaller diameter than the front guide roller 11.

Behind the rear guide roller 12 there is disposed a gutter-shaped spreading means 13, which is built up of two throwing arms 14 and 15 in the illustrated embodiment, said throwing arms being arranged such that the legs of said U-shaped throwing arms extend at least substantially horizontally. Said throwing arms 14 and 15 are thereby pivotable with respect to the frame about pivot pins 16 and 17 respectively, said pivot pins being located near the guide roller 12 and extending more or less vertically upwards. As furthermore appears from the Figures the construction of the illustrated embodiment is such that the legs of the U-shaped throwing arm 15 encompass the legs of the U-shaped throwing arm 14.

The two throwing arms 14 and 15 are interconnected by means of a coupling rod 18, whose ends are pivotable with respect to the throwing arms 14 and 15, about pivot pins extending parallel to the pivot pins 16 and 17.

By means of the pivot pin by means of which the coupling rod 18 is coupled to the U-shaped throwing arm 14 a further coupling rod 19 is pivotally coupled to said throwing means 14. The end of the coupling rod 19 remote from the throwing arm 14 is pivotally coupled to a ring 20. Said ring 20 is rotatably journal led on a disc 21, which is secured to the end of the shaft 2 remote from the motor 7, in such a manner that the central axis of the disc 21 includes an acute angle with the central axis of the shaft 2. The construction has thereby been made such, in a manner known per se, that the ring 20 cannot rotate with the shaft 2, so that when the shaft 2 rotates the coupling point of the coupling rod 19 to the ring 20 will make a reciprocating movement, as indicated by means of the arrow B. It will be apparent that by means of the coupling rod 19 said reciprocating movement of the end of the coupling rod secured to the ring 20 will be converted into a reciprocating movement of the throwing arms 14 and 15 about the pivot pins 16 and 17, as indicated by means of the arrow C.

The drive roller 11 can also be driven in the direction according to the arrow D during operation, e.g. by means of a hydraulic motor (not shown) or the like.

During operation the device will be moved in the direction according to the arrow A, e.g. by means of a tractor or the like. By rotating the shaft 2 with the auger blades 5 and 6 provided thereon the material to be spread, such as fertilizer, will be conveyed from the hopper 1 to the housing 3. The quantity of material supplied to the housing 3 per time unit can thereby be controlled by adjusting the free passage of the openings 8 by means of the adjustable closing plates 9. The fertilizer supplied to the housing 3 will be deposited between the blades 4 on the upper part of the belt 10, said part moving towards the right, when seen in Figure 3. As a result of the contact of said upper part of the belt 10 with the blade wheel having the blades 4 said blade wheel will also be rotated. The throwing means thus formed by the endless belt 10 and the blade wheel having the blades 4 will throw the fertilizer into the U-shaped throwing arms 14 and 15, with a particular velocity as indicated by means of the arrow E. Said material thrown in the throwing arms will be spread over a comparatively large working width by the spreading means 13 which moves reciprocatingly in the direction according to the arrow C during operation.

Since the material to be spread is discharged from the hopper 1 by means of auger-shaped means 5 and 6 with the device according to the invention, which auger-shaped means only need to rotate at a low number of revolutions, the material will not be damaged and/or pulverized in the hopper. Furthermore the material will be given a certain velocity by means of the throwing means consisting of the belt 10 and the blade wheel with the blades 4, without any slip occurring between material and the means moving said material, so that the exit velocity will not be dependent on the nature of the material to be spread.

A further advantage of the construction according to the invention is the relatively low overall height of the throwing mechanism. Besides that the device can be emptied and cleaned easily.

Preferably the construction is such that the endless belt 10 with the guide roller 12 is pivotable about the central axis of the guide and drive roller 11. In this position it is easy to check, when the shaft 2 is rotated, how much material per time unit is discharged with a certain adjustment of the free passage of the openings 8.

Furthermore the construction is preferably such that the end of the coupling rod 19 coupled to the ring 20 can be coupled to the ring 20 in several points located differently spaced from the centre of the ring 20, in order to influence the angle at which the U-shaped throwing arms move reciprocatingly in order to influence the working width of the device.

By furthermore providing a possibility of coupling the rod 19 to the ring 20 in several points along its longitudinal direction, it is also possible to influence the direction in which the material is flung away.

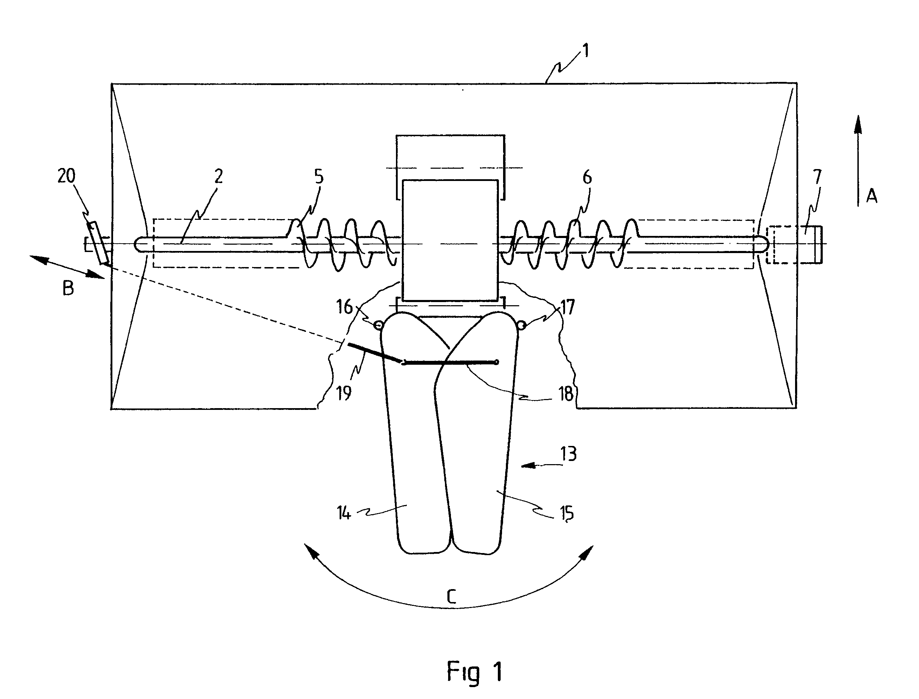

Generally the pivot pins 16 and 17 are preferably disposed such that, when seen in the direction of movement according to the arrow A, the central axed of said pivot pins are located at least substantially in a vertical plane extending in the direction of movement, whereby the bottom ends of the pivot pins are disposed more to the front than the rear ends of the pivot pins; the pivot pins thus slope upwards to the rear, as it were. Because of this arrangement it is achieved that when the throwing arms 14 and 15 take the position illustrated in Figure 1 the fertilizer will fall on the ground at a shorter distance from the device than when the throwing arms are pivoted from said position.

Of course variations and/or additions to the above-described possible embodiment are conceivable within the scope of the invention. Thus the throwing means may e.g. be formed by co-operating blade wheels or rollers. Also a construction is conceivable wherein e.g. a blade wheel co-operates with a plate having a fixed arrangement or the like, instead of the moving belt.

## Claims

1. A device for spreading granular or powdered material, said device being provided with a frame, with a hopper supported by said frame for accommodating the material to be spread, and with a gutter-shaped spreading means, which is pivotable to and fro about an upwardly extending axis of rotation during operation, whereby near one supply end of the spreading means material to be spread is supplied and said material is flung away at the opposite discharge end of the spreading means, characterized in that the device is provided with a throwing means to be driven during operation, which is arranged in such a manner that during operation the material to be spread is thrown into the supply end of the spreading means by means of said throwing means.

2. A device according to claim 1, characterized in that said throuwing means comprises a blade wheel which is rotatable about a horizontal axis of rotation, and an endless belt disposed under said blade wheel, an upper part of said endless belt extending along the circumference of said blade wheel.

3. A device according to claim 1 or 2, characterized in that means are provided for driving said endless belt, via which means the blade wheel is rotated.

4. A device according to claim 2 or 3, characterized in that said endless belt is passed over two end rollers, which are rotatable about horizontal axes of rotation extending perpendicularly to the intended direction of movement of the device, one guide roller being disposed in front of the axis of rotation of the blade wheel and one guide roller being disposed behind the axis of rotation of the blade wheel, when seen in the intended direction of movement of the device.

5. A device according to claim 4, characterized in that said endless belt with one guide roller is pivotable about the axis of rotation of the other guide roller.

6. A device according to any one of the preceding claims, characterized in that said blade wheel is arranged in a housing provided near the bottom end of said hopper, and that an auger is arranged in said hopper, which can be rotated in such a manner during operation that by means of said auger material present in said hopper can be carried to an opening provided in a side wall of the housing.

7. A device according to claim 6, characterized in that in the hopper, on either side of the housing, there is arranged an augers, by means of which material can be driven in the direction of said housing.

8. A device according to claim 7, characterized in that said augers are formed by auger blades, which are provided on a common shaft, which extends through the housing, whilst said blade wheel is freely rotatable about the part of the shaft located in the housing.

9. A device according to any one of the preceding claims, characterized in that said throwing means is formed by two arms having a U-shaped section, which are each pivotable about an upwardly extending pivot pin, and whose legs extend substantially horizontally, both throwing arms being arranged in such a manner that the open sides of the arms having a U-shaped section are arranged to face one another.

10. A device according to claim 9, characterized in that the legs of the one U-shaped throwing arm encompass the legs of the other U-shaped throwing arm.

11. A device according to claim 9 or 10, characterized in that the two throwing arms are coupled by means of a coupling rod pivotally connected to said throwing arms, and that one of said arms is coupled, by means of a further coupling rod, to a driving mechanism, which imparts a reciprocating movement to said further coupling rod.

12. A device according to any one of the preceding claims, characterized in that the axis of rotation of said spreading means slopes upwards to the rear.

13. A method of spreading granular or powdered material, wherein material to be spread is supplied to a gutter-shaped spreading means, which is pivoted to and fro about an upwardly extending axis of rotation during spreading, and wherein near one supply end of said spreading means material to be spread is supplied and said material is flung away at the opposite discharge end of the spreading means, characterized in that the material is thrown into the supply end of the spreading means by means of a throwing means during spreading.

Fig 1

Fig 2

Fig 3

Fig 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-B-1 136 865 (VAN DER LELY) <br> * Column 3, line 54 - column 6, line 50; figures 1,2,3 * | 1,13 | A 01 <br> C 15/00 |
| A | | 9,10,11, 12 | A 01 C 17/00 |
| Y | US-A-3 592 394 (SINDEN) <br> * Column 1, line 62 - column 3, line 26; figures 1-7 * | 1,13 | |
| A | | 2,3,4 | |
| A | DE-B-1 027 443 (RIEMENSPERGER) <br> * Page 1; figures 1,2 * | 6,7 | |
| A | US-A-3 592 393 (SINDEN) <br> * Column 1, line 23 - column 2, line 17; figures 1-5 * | 1,2,3 | |
| A | DE-A-1 431 616 (CLAUSS) <br> * Pages 6-9; figures 1,3 * | 1,13 | |

TECHNICAL FIELDS SEARCHED (Int. Cl.5)

A 01 C
A 01 F

The present search report has been drawn up for all claims

| Place of search | Date of completion of search | Examiner |
|---|---|---|
| The Hague | 24 April 91 | VERMANDER R.H. |